(19) Europäisches Patentamt
European Patent Office
Office européen des brevets

(11) **EP 1 960 825 B1**

(12) **FASCICULE DE BREVET EUROPEEN**

(45) Date de publication et mention
de la délivrance du brevet:
**26.02.2014 Bulletin 2014/09**

(21) Numéro de dépôt: **06841912.6**

(22) Date de dépôt: **12.12.2006**

(51) Int Cl.:
***G02C 7/02*** *(2006.01)*    ***G02C 7/06*** *(2006.01)*

(86) Numéro de dépôt international:
**PCT/FR2006/002708**

(87) Numéro de publication internationale:
**WO 2007/068819 (21.06.2007 Gazette 2007/25)**

(54) **PROCEDE DE DETERMINATION D'UN JEU DE LENTILLES OPHTALMIQUES MULTIFOCALES PROGRESSIVES**

VERFAHRN ZUR BESTIMMUNG EINES SATZES PROGRESSIVER MULTIFOKAL-BRILLENGLÄSER

METHOD FOR DETERMINING A SET OF PROGRESSIVE MULTIFOCAL OPHTHALMIC LENSES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **13.12.2005 FR 0512587**

(43) Date de publication de la demande:
**27.08.2008 Bulletin 2008/35**

(73) Titulaire: **ESSILOR INTERNATIONAL (Compagnie Générale d'Optique) 94227 Charenton Cédex (FR)**

(72) Inventeurs:
• **DROBE, Bjorn**
  **F-94220 Charenton-le-Pont (FR)**
• **PEDRONO, Claude**
  **F-94220 Charenton-le-Pont (FR)**

(74) Mandataire: **Hirsch & Associés
58, avenue Marceau
75008 Paris (FR)**

(56) Documents cités:
**FR-A- 2 753 805        FR-A- 2 858 693
US-A1- 2003 107 707**

• **SCHULDT, STFANIE: "ysis- Natürliches Sehen erleben" DEUTSCHE OPTIKERZEITUNG, no. 5-2004, mai 2004 (2004-05), pages 38-43, XP002398937 Heidelberg, DE**

**Description**

La présente invention a pour objet un procédé de détermination d'un jeu de lentilles ophtalmiques multifocales progressives et le jeu de lentilles ainsi obtenu ; en particulier un jeu de lentilles progressives personnalisé aux besoins spécifiques d'un porteur donné.

Toute lentille ophtalmique, destinée à être portée dans une monture, est associée à une prescription. La prescription en matière ophtalmique peut comprendre une prescription de puissance, positive ou négative, ainsi qu'une prescription d'astigmatisme. Ces prescriptions correspondent à des corrections à apporter au porteur des lentilles pour corriger les défauts de sa vision. Une lentille est montée dans la monture en fonction de la prescription et de la position des yeux du porteur par rapport à la monture.

Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition (ou progression de puissance) représentative de l'incrément de puissance entre la vision de loin et la vision de près; ceci revient à une prescription de puissance en vision de loin et à une prescription de puissance en vision de près. Les lentilles adaptées aux porteurs presbytes sont des lentilles multifocales progressives; ces lentilles sont décrites par exemples dans FR-A-2 699 294, US-A-5 270 745 ou US-A-5 272 495, FR-A-2 683 642, FR-A-2 699 294 ou encore.FR-A-2 704 327.

Les lentilles ophtalmiques multifocales progressives comprennent une zone de vision de loin, une zone de vision de près, une zone de vision intermédiaire, une méridienne principale de progression traversant ces trois zones. Elles sont généralement déterminées par optimisation, à partir d'un certain nombre de contraintes imposées aux différentes caractéristiques de la lentille. La plupart des lentilles commercialisées sont généralistes, en ce qu'elles sont adaptées aux différents besoins courants des porteurs.

On définit des familles de lentilles multifocales progressives, chaque lentille d'une famille étant caractérisée par une addition, qui correspond à la variation de puissance entre la zone de vision de loin et la zone de vision de près. Plus précisément, l'addition, notée A, correspond à la variation de puissance entre un point VL de la zone de vision de loin et un point VP de la zone de vision de près, qui sont appelés respectivement point de contrôle de la vision de loin et point de contrôle de la vision de près, et qui représentent les points d'intersection du regard et de la surface de la lentille pour une vision à l'infini et pour une vision de lecture.

Une lentille présente aussi classiquement une croix de montage CM. Il s'agit d'un point qui est matérialisé sur la surface de la lentille et qui est utilisé par l'opticien pour le montage de la lentille dans la monture. La croix de montage CM correspond au point d'intersection de la face avant de la lentille avec la direction primaire du regard du porteur. Pour une lentille ophtalmique progressive, on définit aussi une longueur de progression LP comme la distance verticale entre la croix de montage CM, et un point de la méridienne sur lequel la progression de puissance atteint la puissance A. La longueur de progression LP définit l'accessibilité aux puissances nécessaires en vision de près.

Des lentilles de même addition diffèrent par la valeur de la sphère moyenne en un point de référence, appelée aussi base. Communément, la base d'une lentille est liée à la courbure d'une face de la lentille et est donnée par l'expression (n-1)/R où n est l'indice de réfraction et R le rayon de courbure exprimé en mètres; la puissance moyenne dépend de la courbure de l'autre face de la lentille. On peut par exemple choisir de mesurer la base au point VL de contrôle de la vision de loin. On définit ainsi par le choix d'un couple (addition, base) un ensemble ou jeu de faces avant asphériques pour lentilles multifocales progressives. Habituellement, on peut ainsi définir 5 valeurs de bases et 12 valeurs d'additions, soient soixante faces avant. Dans chacune des bases, on réalise une optimisation pour une puissante donnée. Cette méthode connue permet, à partir de lentilles semi-finies, dont seule une face est conformée, de préparer des lentilles adaptées à la plupart des porteurs, par simple usinage de l'autre face sphérique ou torique.

Ainsi, les lentilles multifocales progressives comportent habituellement une face asphérique complexe, qui peut être la face avant la face opposée au porteur des lunettes, et une face sphérique ou torique, qui peut être la face arrière dirigée vers le porteur des lunettes. Cette face sphérique ou torique permet d'adapter la lentille à l'amétropie de l'utilisateur, de sorte qu'une lentille multifocale progressive n'est généralement définie que par sa surface asphérique complexe. Comme il est bien connu, une surface asphérique est généralement définie par l'altitude de tous ses points. On utilise aussi les paramètres constitués par les courbures minimales et maximales en chaque point, ou plus couramment leur demi-somme et leur différence. Cette demi-somme et cette différence multipliées par un facteur n-1, n étant l'indice de réfraction du matériau de la lentille, sont appelées sphère moyenne et cylindre. Une lentille multifocale progressive peut ainsi être définie, en tout point de sa surface complexe, par des caractéristiques géométriques comprenant une valeur de sphère moyenne et une valeur de cylindre. La surface complexe de la lentille peut être située sur la face avant ou sur la face arrière ou répartie entre les deux faces, selon les techniques d'usinage utilisées.

Par ailleurs, une lentille multifocale progressive peut aussi être définie par des caractéristiques optiques prenant en considération la situation du porteur des lentilles. En effet, les lois de l'optique des tracés de rayons entraînent l'apparition de défauts optiques quand les rayons s'écartent de l'axe central de toute lentille. On s'intéresse classiquement aux aberrations dites défaut de puissance porteur et d'astigmatisme résultant. Ces aberrations optiques peuvent être appelées de façon générique défauts d'obliité des rayons.

Les défauts d'obliité des rayons ont déjà été bien identifiés dans l'art antérieur et des améliorations ont été proposées. Par exemple, le document WO-A-98 12590 décrit une méthode de détermination par optimisation d'un jeu de lentilles ophtalmiques multifocales progressives. Ce document propose de définir le jeu de lentilles en considérant les caractéristiques optiques des lentilles et notamment la puissance porteur et l'astigmatisme oblique, dans les conditions du porté: La lentille est optimisée par tracé de rayons, à partir d'un ergorama associant à chaque direction du regard dans les conditions du porté un point objet visé.

EP-A-0 990 939 propose aussi de déterminer une lentille par optimisation en tenant compte des caractéristiques optiques et non plus surfaciques de la lentille. On considère à cette fin les caractéristiques d'un porteur moyen, notamment pour ce qui est de la position de la lentille devant l'oeil du porteur en termes de galbe, d'angle pantoscopique et de distance verre-oeil.

Il a été constaté que chaque porteur présente un comportement verre-oeil différent. On a donc cherché, ces dernières années, à personnaliser les lentilles ophtalmiques progressives afin de répondre au mieux aux besoins de chaque porteur.

Par exemple, il est proposé, en particulier par les sociétés ZEISS et RODENSTOCK sous les références respectives Zeiss Individual et Impression ILT, de tenir compte, pour la définition de lentilles progressives, de la position réelle de la lentille devant l'oeil du porteur. A cette fin, on procède à des mesures de la position de la lentille dans la monture choisie par le porteur. La mesure de la position de la lentille par rapport à l'oeil du porteur est d'abord difficile à effectuer avec précision. Ensuite, l'optimisation s'effectue pour une position mesurée de la lentille devant l'oeil du porteur; or il s'avère que la position de la monture varie en fonction du temps et ne peut être considérée comme constante pour un porteur donné. Du fait de ces deux facteurs, la prise en compte de la position de la lentille ne semble pas apporter au porteur un confort supplémentaire par rapport à des solutions ne prenant en considération que la position moyenne de la lentille.

La demanderesse commercialise, sous la marque VARILUX IPSEO une gamme de lentilles multifocales progressives, qui sont définies en fonction du comportement oeil-tête du porteur. Cette définition repose sur le constat que tout porteur, pour regarder différents points à une hauteur donnée dans l'espace objet, peut déplacer soit la tête, soit les yeux et que la stratégie de vision d'un porteur repose sur une combinaison des mouvements de la tête et des yeux. La stratégie de vision du porteur influe sur la largeur perçue des champs sur la lentille. Ainsi, plus la stratégie de vision latérale du porteur fait intervenir un mouvement de la tête, moins la zone de la lentille balayée par le regard du porteur est large. Si le porteur bougeait uniquement la tête pour regarder différents points à une hauteur donnée de l'espace objet, son regard passerait toujours par le même point de la lentille. Le produit VARILUX IPSEO propose donc des lentilles différentes, pour un même couple amétropie-addition, en fonction de la stratégie de vision latérale du porteur.

Dans le même ordre d'idée de personnaliser les lentilles ophtalmiques progressives aux besoins spécifiques de chaque porteur, la demande de brevet français déposée par la demanderesses sous le titre *Procédé de détermination d'une paire de lentilles ophtalmiques progressives* le 27 août 2004 sous le numéro 04 09 144 propose de tenir compte du décalage du plan sagittal du porteur en vision de près pour la détermination des caractéristiques optiques des lentilles progressives.

La société RUPP & HUBRACH a par ailleurs proposé, sous la référence Ysis, de mesurer l'inclinaison de la tête pendant une tâche de vision de près pour déterminer le choix entre quatre longueurs de progression proposées. Cette mesure ne prend cependant pas complètement en compte le comportement oeil-tête car elle ne tient pas compte de l'abaissement total du regard qui peut être défini comme la somme de l'abaissement des yeux dans les orbites et de l'inclinaison de la tête.

Aucune des lentilles multifocales progressives connues à ce jour ne propose une personnalisation complète de la paire de lentilles prescrites à un porteur donné. Or, des mesures effectuées dans les laboratoires de la demanderesse montrent que plusieurs paramètres physiologiques de coordination visuomotrice influent sur la perception nette des points objets dans l'environnement du porteur de lentilles progressives. En plus des caractéristiques optométriques et de monturisation traditionnelles, cinq paramètres de coordination visuomotrice - la participation de la tête en horizontal et en vertical, l'abaissement privilégié du regard pendant une tâche de vision de près, la distance privilégiée de travail en vision de près et le décalage latéral du document en vision de près - ont été identifiés comme influant sur les caractéristiques optiques des lentilles. Or ces paramètres physiologiques de coordination visuomotrice varient de manière sensible d'un individu à l'autre ; ils semblent répondre à la recherche d'un confort visuel optimal dépendant de caractéristiques physiologiques et visuelles propres à chaque individu.

Devant la multiplicité des paramètres à prendre en compte pour parvenir à une paire de lentilles bien personnalisée aux besoins d'un porteur donné, la plupart des solutions de l'art antérieur cherchent à privilégier l'un ou l'autre de ces paramètres et fixent les autres à des valeurs standard moyennes.

Il existe donc un besoin pour des lentilles qui satisfassent mieux les besoins spécifiques de chaque porteur individuel.

L'invention propose en conséquence un procédé de détermination par optimisation d'un jeu de lentilles ophtalmiques multifocales progressives à partir de cibles pondérées en puissance porteur et en astigmatisme résultant ; ces cibles étant déterminées à partir de l'ensemble des paramètres physiologiques du porteur et d'un modèle physio-optométrique.

Le modèle physio-optométrique utilisé dans le cadre de l'invention permet de prendre en compte tous ou certains des paramètres physiologiques individuels parmi les cinq précédemment identifiés et de fixer éventuellement les autres à des valeurs standard par défaut. Le porteur pourra ainsi conserver une posture plus naturelle tout en préservant son confort visuel.

L'invention propose plus particulièrement un procédé de détermination par optimisation d'un jeu de lentilles ophtalmiques progressives selon la revendication 1.

Selon une caractéristique, le défaut de puissance cible est déterminé par la relation suivante :

$$DefP = \frac{(\mathrm{Pr}\,obH')\left(\left(\dfrac{Add_n}{a}\right) - Add_r\right)}{kp}$$

Avec,

ProbH', la probabilité d'occurrence de l'orientation du regard ;
$Add_n$ l'addition nominale prescrite au porteur ;
$Add_r$ l'addition requise en un point de la lentille; et
kp et a, des constantes déterminées en fonction de l'addition prescrite et des paramètres physiologiques du porteur.

Selon une caractéristique, l'astigmatisme résultant cible est déterminé par la relation suivante :

$$A = Ast_{MAX}.(\mathrm{Pr}\,obH')$$

Avec,
ProbH', la probabilité d'occurrence de l'orientation du regard ; et

$$Ast_{MAX} = Add_n \times (k+b) \times \left( 0,25 + e^{\frac{\left(\ln\left(\frac{élev_{reg}-121}{-alpha0}\right)\right)^2}{sigma}} \right)$$

Où, $Add_n$ est l'addition nominale prescrite au porteur ; et k, b, alpha0 et sigma des constantes déterminées en fonction des paramètres physiologiques du porteur.

Selon les modes de réalisation, les paramètres physiologiques du porteur mesurés sont au moins les coefficients de participation vertical et horizontal de la tête en vision de près, l'horoptère vertical en vision de près et la distance de vision de près préférée Dvp.

D'autres avantages et caractéristiques de l'invention apparaîtront à la lecture de la description qui suit des modes de réalisation de l'invention, donnés à titre d'exemple et en référence aux dessins qui montrent :

- figure 1, un schéma d'un système optique oeil-lentille, en vue dé dessus ;
- figures 2 et 3, des schémas en perspective d'un système oeil-lentille ;
- figure 4, un schéma d'un sujet dans un environnement sollicitant sa vision de près ;
- figure 5, un graphe de la distribution horizontale du regard pour un abaissement du regard donné;
- figure 6, un graphe de la distribution verticale du regard pour une déviation horizontale nulle ;
- figure 7a, un exemple de distribution dans le champ de vision des probabilités relatives de ne pas avoir une orientation du regard ;
- figure 7b, le défaut d'astigmatisme résultant pour la distribution de la figure 7a, calculé avec l'équation (2) du modèle physio-optométrique ;
- figure 8, un graphe des écarts types dans le plan sagittal ;
- figure 9, une représentation graphique du défaut d'astigmatisme maximal accepté pour un jeu de lentilles selon l'invention en fonction de l'élévation du regard ;
- figures 10a à 10f, des profils de méridiennes pour des exemples de lentilles obtenues par optimisation avec le procédé selon l'invention ;
- figures 11a à 11f, des cartes de puissance porteur pour les lentilles des figures 10a à 10f ;
- figures 12a à 12f, des cartes d'astigmatisme résultant pour les lentilles des figures 10a à 10f

L'invention propose un procédé de détermination d'une paire de lentilles ophtalmiques progressives pour un porteur presbyte, c'est-à-dire pour lequel une addition de puissance A a été prescrite pour la vision de près.

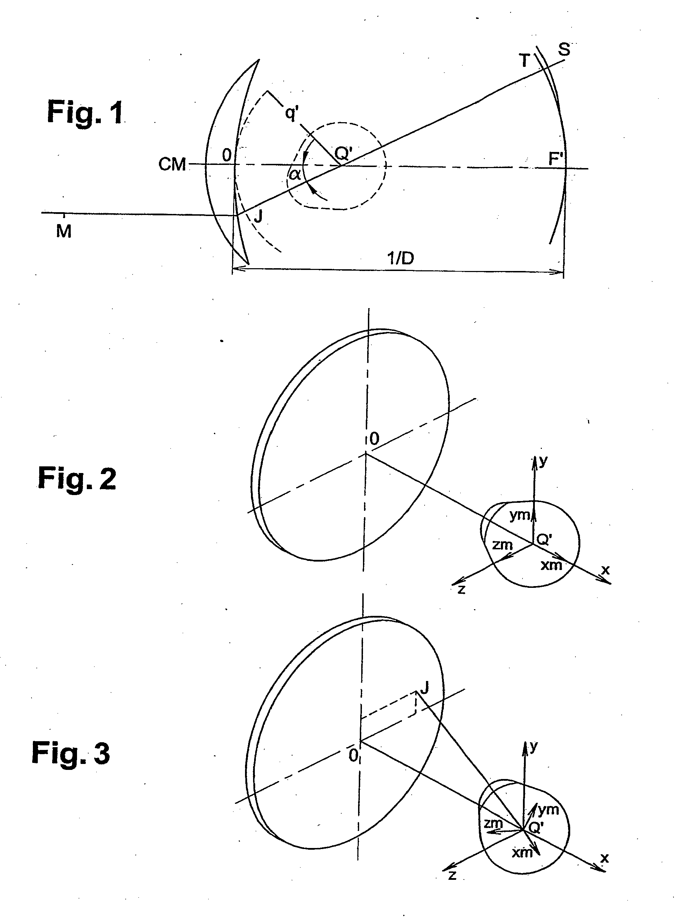

De manière classique, on définit pour une lentille donnée des grandeurs optiques caractéristiques, à savoir une puissance porteur et un astigmatisme résultant, dans les conditions du porté. La figure 1 montre un schéma d'un système optique oeil et lentille en vue de côté, et montre les définitions utilisées dans la suite de la description. On appelle Q' le centre de rotation de l'oeil; l'axe Q'F' représenté sur la figure en traits mixtes est l'axe horizontal passant par le centre de rotation de l'oeil et s'étendant devant le porteur - autrement dit l'axe Q'F' correspond à la direction primaire du regard. Cet axe coupe, sur la face avant, un point de la lentille appelé Croix de Montage CM, qui est matérialisé sur les lentilles pour permettre leur positionnement par un opticien. La Croix de Montage permet de repérer sur la lentille la direction primaire du regard dans les conditions du porté. Soit le point O, point d'intersection de la face arrière et de cet axe Q'F'. On définit une sphère des sommets, de centre Q', et de rayon q', qui coupe la face arrière de la lentille au point O. A titre d'exemple, une valeur du rayon q' de 27 mm correspond à une valeur courante et fournit des résultats satisfaisants lors du porté des lentilles. On peut dessiner la coupe de la lentille dans le plan (O, x, y) défini en référence à la figure 2. La tangente à cette courbe au point O est inclinée par rapport à l'axe (O, y) d'un angle appelé angle pantoscopique.. La valeur de l'angle pantoscopique est couramment de 8°. On peut également dessiner la coupe de la lentille dans le plan (O, x; z). La tangente à cette courbe au point O est inclinée par rapport à l'axe (O, z) d'un angle appelé galbe. La valeur du galbe est couramment de 0°.

Une direction donnée du regard - représentée en traits pleins sur la figure 1 - correspond à une position de l'oeil en rotation autour de Q' et à un point J de la sphère des sommets; une direction du regard peut aussi être repérée, en coordonnées sphériques, par deux angles $\alpha$ et $\beta$. L'angle $\alpha$ est l'angle formé entre l'axe Q'F' et la projection de la droite Q'J sur le plan horizontal contenant l'axe Q'F'; cet angle apparaît sur le schéma de la figure 1. L'angle $\beta$ est l'angle formé entre l'axe Q'F' et la projection de la droite Q'J sur le plan vertical contenant l'axe Q'F'. Une direction donnée du regard correspond donc à un point J de la sphère des sommets ou à un couple $(\alpha, \beta)$.

Dans une direction donnée du regard, l'image d'un point M de l'espace objet situé à une distance objet donnée, se forme entre deux points S et T correspondant à des distances JS et JT minimale et maximale (qui seraient des distances focales sagittales et tangentielles dans le cas de surfaces de révolution, et d'un point M à l'infini). L'angle $\gamma$, repéré comme l'axe d'astigmatisme, est l'angle formé par l'image correspondant à la distance la plus petite avec l'axe $(z_m)$, dans le plan $(z_m, y_m)$ défini en référence aux figures 2 et 3. L'angle $\gamma$ est mesuré dans le sens trigonométrique direct lorsque l'on regarde le porteur. Dans l'exemple de la figure 1, sur l'axe Q'F', l'image d'un point de l'espace objet à l'infini se forme au point F'; les points S et T sont confondus, ce qui revient à dire que la lentille est localement sphérique dans la direction primaire du regard. La distance D est la frontale arrière de la lentille.

Les figures 2 et 3 montrent des schémas en perspective d'un système oeil-lentille. La figure 2 montre la position de l'oeil et du repère lié à l'oeil dans la direction de regard principale, $\alpha = \beta = 0$, dite direction primaire du regard. Les points J et O sont alors confondus. La figure 3 montre la position de l'oeil et du repère qui y est lié dans une direction $(\alpha, \beta)$. On a représenté sur les figures 2 et 3 un repère {x, y, z} fixe et un repère $\{x_m, y_m, z_m\}$ lié à l'oeil, pour bien montrer la rotation de l'oeil. Le repère {x, y, z} a pour origine le point Q'; l'axe x est l'axe Q'F' - le point F' n'étant pas représenté sur les figures 2 et 3 et passe par le point O; cet axe est orienté de la lentille vers l'oeil, en correspondance avec le sens de mesure de l'axe d'astigmatisme. Le plan {y, z} est le plan vertical; l'axe y est vertical et orienté vers le haut; l'axe z est horizontal, le repère étant orthonormé direct. Le repère $\{x_m, y_m, z_m\}$ lié à l'oeil a comme centre le point Q'; l'axe $x_m$ est donné par la direction JQ' du regard, et coïncide avec le repère {x, y, z} pour la direction primaire du regard. La loi de Listing donne les relations entre les repères {x, y, z} et $\{x_m, y_m, z_m\}$ pour chaque direction du regard, voir Legrand, Optique Physiologique, tome 1, Edition de la Revue d'Optique, Paris 1965.

A l'aide de ces éléments, on peut définir une puissance optique porteur et un astigmatisme, dans chaque direction du regard. Pour une direction du regard $(\alpha, \beta)$, on considère un point M objet à une distance objet donnée. On détermine les points S et T entre lesquels se forme l'image de l'objet. La proximité image PI est alors donnée par :

$$PI = \frac{1}{2}\left(\frac{1}{JT} + \frac{1}{JS}\right)$$

tandis que la proximité objet PO est donné par

$$PO = \frac{1}{MJ}$$

La puissance est définie comme la somme des proximités objet et image, soit

$$P = PO + PI = \frac{1}{MJ} + \frac{1}{2}\left(\frac{1}{JT} + \frac{1}{JS}\right)$$

L'amplitude de l'astigmatisme est donnée par :

$$A = \left|\frac{1}{JT} - \frac{1}{JS}\right|$$

L'angle de l'astigmatisme est l'angle $\gamma$ défini plus haut : il s'agit de l'angle mesuré dans un repère lié à l'oeil, par rapport à la direction $z_m$, avec lequel se forme l'image T, dans le plan $(z_m, y_m)$. Ces définitions de puissance et d'astigmatisme sont des définitions optiques, dans les conditions du porté et dans un repère lié à l'oeil Qualitativement, la puissance et l'astigmatisme ainsi définis correspondent aux caractéristiques d'une lentille mince, qui placée à la place de la lentille dans la direction du regard, fournirait localement les mêmes images. On remarque que la définition fournit, dans la direction primaire du regard, la valeur classique de prescription de l'astigmatisme. Une telle prescription est effectuée par l'ophtalmologiste, en vision de loin, sous la forme d'un couple formé d'une valeur d'axe (en degrés) et d'une valeur d'amplitude (en dioptries).

La puissance et l'astigmatisme ainsi définis peuvent être mesurés expérimentalement sur la lentille en utilisant un frontofocomètre; ils peuvent aussi être calculés par tracé de rayons dans les conditions du porté.

Il est connu du document WO-A-98 12590 un procédé de détermination d'un ergorama pour un jeu de lentilles ophtalmiques progressives généralistes. L'ergorama associe à chaque direction du regard dans les conditions au porté, un point objet visé et une puissance donnée. Cet ergorama fournit des cibles pour une optimisation des lentilles par tracé de rayons pour calculer la puissance porteur et l'astigmatisme résultant en chaque point de la lentille traversé par la ligne du regard.

L'astigmatisme résultant est un défaut inhérent aux lentilles progressives ; il peut donc être considéré comme un défaut tolérable, au moins en zone périphérique de la lentille.

La présente invention propose de prendre en compte les paramètres physiologiques d'un porteur donné, tels que la participation de la tête en horizontal et en vertical, l'abaissement privilégié du regard pendant une tâche de vision de près, la distance privilégiée de travail en vision de près et le décalage latéral du document en vision de près, pour concevoir des lentilles progressives propres à chaque individu afin que celui-ci puisse profiter pleinement de la compensation de sa presbytie sans effort dans une posture naturelle et en préservant son confort visuel. La prise en compte de tels paramètres individuels est aujourd'hui possible de manière industrielle grâce aux méthodes d'usinage direct des surfaces complexes constituant les lentilles progressives.

En particulier, l'invention propose d'utiliser les paramètres physiologiques du porteur pour limiter au maximum l'astigmatisme résultant dans le champs de regard le plus utilisé par ce porteur. En effet, moins une orientation du regard est utilisée, plus le défaut d'astigmatisme tolérable peut être important. Un jeu de lentilles ophtalmiques progressives présentant un défaut d'astigmatisme résultant contrôlé en fonction de la fréquence des orientations du regard à travers les lentilles peut ainsi être obtenu.

La demanderesse a constaté que chaque individu adopte une posture permettant d'avoir un confort visuel maximal en vision de près. En particulier, l'individu adopte une posture permettant d'avoir une distance de visée proche d'une valeur préférée et incline son document ou modifie l'élévation des yeux et de la tête si le document est posé sur un support, de façon le faire coïncider avec son horoptère vertical. L'horoptère vertical pour un point de fixation donné est défini ici comme le lieu des lignes verticales perçues binoculairement simples et verticales.

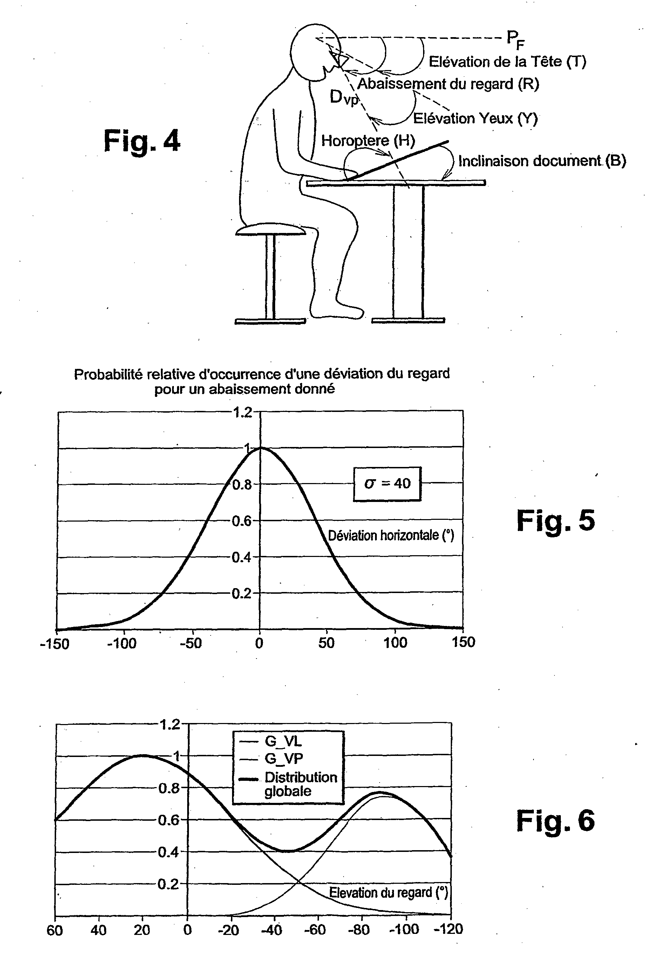

La figure 4 illustre schématiquement un porteur dans un environnement de lecture d'un document, c'est-à-dire dans lequel la vision de près du porteur est sollicitée.

Les observations expérimentales de la demanderesse ont montrées que pour explorer son environnement un individu bouge plus ou moins la tête et les yeux par des mouvements coordonnés. Les mouvements de la tête sont caractérisés dans un repère lié à l'espace ayant pour origine le centre de rotation de la tête. Les mouvements des yeux sont caractérisés dans des repères liés à la tête et ayant pour origine le centre de rotation de chacun des deux yeux. La direction du regard $D_R$ est caractérisée par rapport à un plan de référence lié à la tête et appelé plan de Francfort. Une définition du plan de Francfort est donnée dans les demandes de brevet FR-A-2 683 642 et FR-A-2 683 643 ; le plan de Francfort PF est le plan passant par le bord inférieur des orbites des yeux et par le tragion des oreilles du porteur. La direction du regard $D_R$ est une droite appartenant à un plan contenant le point visé et les centres de rotation des yeux.

En vision de loin, avec un point de visé droit devant à l'infini, la direction du regard est horizontale. En position naturelle, pour cette direction du regard en vision de loin, le plan de Francfort est horizontal ; l'amplitude des mouvements verticaux des yeux et de la tête est donc considérée nulle.

Lorsque le porteur quitte un point de visée en vision de loin pour atteindre un point de visée en vision de près, il se positionne pour que la distance moyenne du document à ses yeux soit voisine de sa distance préférée Dvp ; et il incline le document et/ou abaisse les yeux et la tête dans des proportions respectives différentes selon les individus pour que le document fasse un angle voisin de son horoptère vertical avec la direction du regard.

Dans ce contexte, on définit l'élévation de la tête comme l'angle T que fait le plan de Francfort PF avec un plan horizontal de l'espace et on définit l'élévation des yeux - ou l'élévation oculaire - comme l'angle Y que fait la direction du regard $D_R$ avec le plan de Francfort $P_F$. Les valeurs d'élévation des yeux ou de la tête sont donc des abaissements et sont exprimées avec des valeurs d'angles négatives. L'abaissement du regard R sera donc assuré par une élévation de la tête T et par une élévation des yeux. Plus spécifiquement R=T+Y. L'abaissement du regard R est donc l'angle formé entre le plan horizontal de l'espace et la direction du regard $D_R$.

Au voisinage du point de fixation, l'horoptère vertical peut être assimilé à une portion de plan plus ou moins inclinée d'un angle H par rapport à la direction de regard $D_R$. Du fait de l'équilibre musculaire, l'abaissement des yeux en vision rapprochée associé à la convergence entraîne une torsion des globes oculaires qui induit une modification des références verticales et horizontales du système visuel. L'horoptère vertical H varie donc avec l'élévation des yeux Y. L'horoptère vertical H, pour un sujet donné, varie avec la distance de visée. On pourra se référer à ce sujet au manuel « Vergence eye movements : Basic & clinical aspects », de Clifton M. Schor et Kenneth J. Ciuffreda, p 557, paru en 1983.

L'horoptère vertical est une grandeur qui varie d'un individu à l'autre en fonction de paramètres morphologiques, physiologiques et comportementaux ; en revanche, l'horoptère vertical, pour une distance donnée, est sensiblement constant pour un individu donné. Ainsi, chaque individu se positionnera et/ou inclinera son document d'un angle B pour que le document fasse un angle voisin de son horoptère vertical avec la direction du regard $D_R$. De même, la distance de vision de près préférée Dvp varie d'un individu à l'autre mais reste sensiblement constante pour un individu donné. Dans la suite, pour mesurer les paramètres physiologiques du porteur, on considèrera que le document est placé à plat sur un support horizontal, c'est-à-dire que l'angle B est nul. L'horoptère vertical H et la direction du regard auront donc la même valeur angulaire.

La plupart des lentilles ophtalmiques progressives commercialisées sont dites généralistes et sont calculées pour répondre aux besoins du plus grand nombre. Le procédé de l'invention propose de mesurer par des moyens appropriés la posture de vision de près de chaque porteur. En particulier, le procédé propose de limiter au maximum l'astigmatisme résultant dans le champs de regard le plus utilisé par le porteur. Les paramètres de personnalisation permettent ainsi, non seulement de fournir un jeu de lentilles ophtalmiques progressives présentant une longueur de progression spécifiquement adaptée au porteur, mais également de fournir un jeu de lentilles ophtalmiques progressives présentant un défaut d'astigmatisme résultant contrôlé en fonction de la fréquence des orientations du regard à travers les lentilles.

On construit dans un premier temps un modèle physio-optométrique dont les variables d'entrée sont les paramètres physiologiques du porteur. Ce modèle fournira ainsi des valeurs de cibles pour l'optimisation des surfaces complexes de chaque lentille du jeu de lentilles personnalisé en fonction de la distribution des orientations du regard du porteur.

La figure 5 est un graphe montrant la distribution des orientations horizontales du regard. Nous pouvons estimer que les fréquences d'orientation horizontale du regard suivent une distribution gaussienne entre les limites naturelles fixées par les amplitudes maximales des mouvements des yeux et de la tête, soit entre -150° et +150°. L'expression de cette distribution est la suivante :

$$GaussH = e^{-\frac{1}{2}\left(\frac{\alpha}{\sigma}\right)^2} \tag{1}$$

Avec $\alpha$, la déviation horizontale du regard en degrés et $\sigma$ l'écart type de la Gaussienne.

Plus cette fréquence d'orientation est élevée plus la probabilité d'avoir une telle orientation est importante. La probabilité maximale est obtenue pour la fréquence maximale. Nous pouvons normaliser cette probabilité d'occurrence en ramenant cette probabilité maximale à 1. La figure 5 montre que l'orientation horizontale du regard la plus élevée correspond à un regard droit devant et que la déviation horizontale du regard diminue avec l'abaissement de regard.

La figure 6 est un graphe montrant la distribution des orientations verticales du regard. La fréquence de balayage vertical peut être représentée par l'enveloppe d'au moins deux gaussiennes ; une pour la vision de loin G_VL et une pour la vision de près G_VP. La figure 6 donne un exemple de distribution des abaissements du regard avec une déviation horizontale nulle. Le maximum de la distribution gaussienne pour la vision de près est centré sur l'abaissement du regard préféré en vision de près propre à chaque sujet. Le maximum de la distribution gaussienne pour la vision de loin est centré au voisinage de la direction droit devant. On peut considérer que la vision de loin est généralement plus utilisée que la vision de près. Un coefficient peut donc moduler la gaussienne de la distribution en vision de près ; dans l'exemple de la figure 6, ce coefficient est fixé à 0,75, c'est-à-dire que la probabilité relative d'un abaissement du regard sur l'horoptère vertical en vision de près est moins importante que la probabilité relative d'un regard droit devant.

Le défaut de puissance et d'astigmatisme résultant tolérable en un point donné sera alors fonction de la valeur de la distribution horizontale et de l'écart type de la Gaussienne de l'orientation horizontale du regard telle que représentée sur la figure 5. Le défaut d'astigmatisme sera fixé à une valeur nulle quand GaussH est égale à 1 et pourra atteindre une valeur maximale quand GaussH est nulle.

La lentille idéale n'aurait pas de défaut d'astigmatisme. Il nous faut donc fixer pour chaque point d'une lentille un défaut tolérable.

Le modèle ci-dessus nous donne pour chaque orientation du regard une probabilité d'occurrence de cette orientation (ProbH=1-GaussH) ayant une valeur comprise entre 0 et 1 inclus. La valeur 0 caractérisant là probabilité maximale et la valeur 1 une orientation pratiquement jamais utilisée. Pour cette orientation jamais ou rarement utilisée, le porteur tolèrera un défaut maximal que l'on fixe en fonction de l'addition.

Pour l'orientation ayant la probabilité maximale d'occurrence, aucun défaut ne sera toléré. Le modèle fixe cette probabilité maximale sur le plan sagittal donc sur la méridienne.

L'astigmatisme résultant peut alors être exprimé de la manière suivante :

$$A = A_{MAX}.(1 - GaussH) = ka.Add_n.(probH) \qquad (2)$$

où $A_{MAX}$ est le défaut maximal tolérable qui est égal à ka fois l'addition nominale ($Add_n$), c'est-à-dire l'addition prescrite au porteur, avec ka une constante liée à l'addition prescrite; et

$$ProbH = 1\text{-}GaussH.$$

Par ailleurs, la puissance porteur peut être exprimé de la manière suivante :

$$P = PPOr + \frac{(probH)\left(\left(\dfrac{Add_n}{a}\right) - Add_r\right)}{kp} \qquad (3)$$

Où P est la puissance porteur finale ;
PPOr, la puissance porteur requise brute calculée dans l'ergorama ;
$Add_n$ l'addition nominale - soit l'addition prescrite au porteur ;
$Add_r$ l'addition requise qui est égale à la puissance porteur requise PPOr moins la puissance en vision de loin prescrite ; et
kp et a, des coefficients fixant le défaut de puissance maximal.

Une telle équation permet d'assurer un défaut de puissance nul le long de la méridienne et le long d'une ligne iso addition porteur correspondant à la moitié de l'addition nominale ($Add_n$/2) lorsque le coefficient a est fixé à 2.

Par exemple, dans ce modèle de base, les constantes a et kp sont fixées à 2 pour que le défaut maximal de puissance P soit de 0.5 dioptrie pour une addition nominale $Add_n$ de 2 dioptries et soit nul quand $Add_r$ est égal à $Add_n$/2.

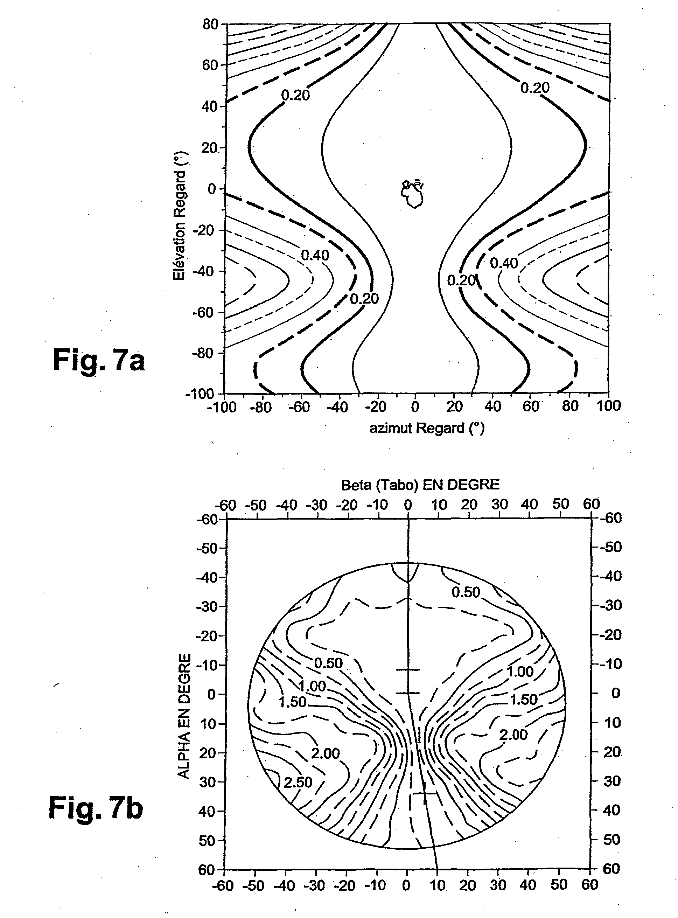

Les figures 7a et 7b montrent, pour l'oeil droit d'un sujet standard, respectivement la distribution dans le champ de vision du porteur des probabilités relatives de ne pas avoir l'orientation du regard (ProbH=1-GaussH) et le défaut d'astigmatisme résultant calculé par optimisation optique avec l'équation (2) du modèle.

La figure 7b montre que l'application l'équation (2) dans le processus de calcul d'optimisation optique ne correspond pas à des cibles réalisables pour des lentilles multifocales progressives. En effet, sur la figure 7a, les champs se referment de façon trop importante en haut et en bas de la lentille pour pouvoir maîtriser les distributions des défauts sur la surface en zone de vision de loin et en zone de vision de près. D'autre part, pour ce porteur standard, la faible distance entre les maxima des distributions verticales de l'abaissement (ou élévation) du regard entraîne la disparition du creux entre les courbes d'isoastigmatisme en vision de loin et en vision de près sur la distribution globale. Cette disparition du creux est incompatible avec l'optimisation des lentilles progressives où la largeur entre les lignes d'isoastigmatisme est essentiellement commandée par la vitesse de variation de la puissance le long de la méridienne.

On constate que dans les équations (2) et (3) du modèle, la variable ProbH commande les distributions du défaut de puissance et du défaut d'astigmatisme. Or, pour des lentilles progressives, ces deux grandeurs doivent être traitées séparément.

Pour le calcul des lentilles progressives, l'abaissement des yeux (ou élévation oculaire) sera pris en compte plutôt que l'abaissement du regard. L'équation (1) de la distribution gaussienne du regard GaussH et la probabilité d'occurrence de cette orientation ProbH, qui sont des hypothèses physiologiques, doivent être modifiées.

On définit une nouvelle équation pour la probabilité d'occurrence de l'orientation du regard, comme suit :

$$\mathrm{Pr}\,obH' = 1 - e^{-\frac{1}{2}\left(\frac{|\alpha|^z}{\sigma h}\right)^2} \tag{4}$$

Avec,

$\alpha$ la déviation horizontale du regard en degrés pour un abaissement donné ;

z, un facteur de mise en forme compris entre 0,5 et 1 qui dépend des paramètres physiologiques du porteur ; et

$\sigma h$, une fonction biphasique de la distribution verticale de l'orientation oculaire et qui s'exprime comme suit :

$$\sigma h = ShMax \times Distrib \times \left( \frac{A\max_{VL}}{1 + 10^{((X0_{VL} - Elev_{oc})Hvl)}} + \frac{A\max_{VP}}{1 + 10^{((Elev_{oc} - X0_{VP})Hvp)}} \right) \tag{5}$$

Où, Distrib est une constante qui dépend de l'addition nominale prescrite ;

ShMax est une constante qui dépend de l'addition prescrite et du comportement visiomoteur du porteur;

$Amax_{VL}$ et $Amax_{VP}$, les asymptotes supérieures de $\sigma h$ respectivement en vision de loin et en vision de près ;

$H_{VL}$ et $H_{VP}$, les pentes de variation de $\sigma h$ respectivement lorsque vers la vision de loin et vers la vision de près ;

$Elev_{OC}$, l'élévation oculaire verticale ; et

$X0_{VL}$ et $X0_{VP}$, l'élévation oculaire pour lesquelles la moitié de $Amax_{VL}$ et $Amax_{VP}$ est respectivement atteinte sur $\sigma h$.

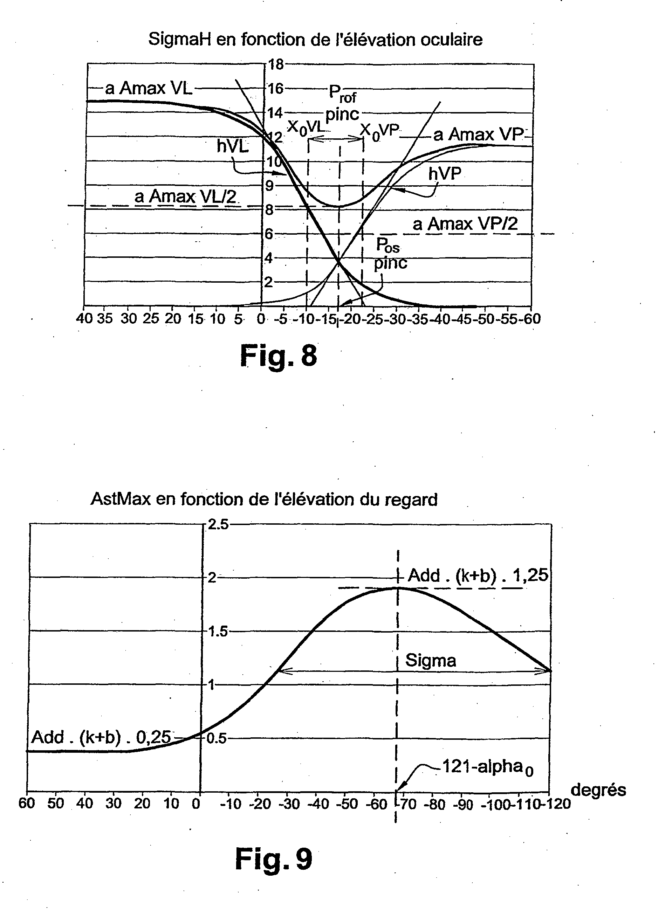

La figure 8 montre la distribution des orientations oculaires verticales pour une déviation horizontale nulle. La figure 8 est une représentation graphique de l'équation (5) de $\sigma h$ avec $Elev_{OC}$ portée en abscisses. Le graphe de la figure 8 représente donc les écarts types de l'orientation des yeux dans le plan sagittal.

A partir du graphe de la figure 8, on peut lier les variables $X0_{VP}$ et $X0_{VL}$ par deux autres paramètres :

Pospinc, qui fixent la position du minimum d'une orientation verticale du regard sur la lentille ; et

Profpinc, qui représente la profondeur de ce minimum et qui correspond à la différence entre $X0_{VL}$ et $X0_{VP}$.

Nous avons alors les relations suivantes qui en découlent :

$$X0_{VP} = Pospinc - (Profpinc/2) ;$$

et

$$X0_{VL} = Pospinc + (Profpinc/2) \tag{6}$$

Le défaut de puissance pour une lentille progressive pourra alors être exprimé de la manière suivante :

$$DefP = \frac{(\mathrm{Pr}\,obH')\left(\left(\frac{Add_n}{a}\right) - Add_r\right)}{kp} \qquad (7)$$

Avec,

ProbH' tel que défini dans l'équation (4) ;
$Add_n$ l'addition nominale - soit l'addition prescrite au porteur ;
$Add_r$ l'addition requise qui est égale à la puissance porteur requise PPOr moins la puissance en vision de loin prescrite ; et
kp et a, des coefficients fixant le défaut de puissance maximal.

Par ailleurs, l'astigmatisme résultant pour une lentille progressive sera déterminé par la relation suivante :

$$A = Ast_{MAX}.(\mathrm{Pr}\,obH') \qquad (8)$$

Dans cette nouvelle équation (8) de l'astigmatisme résultant, la spécificité des lentilles progressives est prise en compte en faisant varier la valeur de l'astigmatisme maximal ($Ast_{MAX}$) en fonction de l'élévation du regard afin de mieux maîtriser les valeurs d'astigmatisme tolérable dans les zones de vision de près et de vision de loin.
On exprime la valeur de l'astigmatisme maximale tolérable comme suit :

$$Ast_{MAX} = Add_n \times (k+b) \times \left( 0,25 + e^{\frac{\left( \ln\left( \frac{elev_{reg} - 121}{-alpha0} \right) \right)^2}{sigma}} \right) \qquad (9)$$

Cette équation (9) de l'astigmatisme maximal tolérable sur la lentille dépend non seulement de l'addition nominale $Add_n$ mais également de l'élévation du regard. La valeur maximale d'astigmatisme résultant sera donc atteinte sur la partie de la lentille aux alentours du pincement défini sur la figure 8.
La figure 9 donne une représentation graphique de $Ast_{MAX}$ en fonction de l'élévation du regard. Le facteur (k+b) fixe la valeur maximale de l'astigmatisme en fonction de l'addition pour une élévation du regard moins 121°. Cette valeur maximale de l'astigmatisme est fixée à $Add_n$.(k+b).1,25 et la valeur minimale vaut $Add_n$.(k+b).0,25. La valeur de 121° est choisie pour permettre une validité de l'expression dans tout le champ visuel (120° vers le haut).
Les équations de défaut de puissance et d'astigmatisme résultant (7) et (8) ci-dessus permettent de calculer par optimisation le design d'une lentille progressive.
Un jeu de lentilles progressives personnalisé aux besoins d'un porteur pourra être calculé avec les équations ci-dessus en introduisant les paramètres physiologiques du porteur dans le calcul de l'ergorama et en faisant varier certains des facteurs desdites équations en fonction des paramètres porteurs pour tendre vers des solutions de designs réalisables.
Le procédé selon l'invention propose donc de mesurer l'horoptère vertical en vision de près H du porteur, c'est-à-dire l'angle que fait la direction du regard avec le document contenant le point visé, ainsi que l'abaissement du regard et l'élévation de la tête en vision de près et de déterminer un coefficient de participation vertical Ptv de la tête en vision de près afin de déterminer une longueur de progression LP spécifiquement adaptée aux besoins de ce porteur. On définit le coefficient de participation vertical de la tête comme le rapport de l'élévation de la tête sur l'abaissement du regard Ptv = T/R. Le procédé propose aussi de déterminer la distance de vision de près Dvp préférée du porteur, ainsi que le roulis de la tête et le coefficient de participation horizontal de la tête Pth. On définit le coefficient de participation horizontal de la tête comme le rapport de l'orientation de la tête dans le plan horizontal sur l'orientation du regard dans ce même plan.
Les mesures pour mettre en oeuvre le procédé selon l'invention peuvent être effectuées de la manière suivante.

L'environnement choisi est un environnement de bureau comme représenté sur la figure 4. Le porteur est placé à une table de travail, un document à plat sur la table (B=0). Le porteur est positionné de façon telle que pour fixer le centre du document il abaisse les yeux et la tête pour que l'angle que fait le document avec là ligne de regard $D_R$ soit égal à l'horoptère vertical H en vision de près et que le document soit à une distance de vison de près préférée Dvp de ses yeux. Ce positionnement permet de placer le centre de rotation de la tête dans l'environnement. Ce point est alors considéré fixe. Pour décrire l'environnement du regard, la tête du porteur tournera autour de ce point, les yeux tourneront dans la tête. La position des centres de rotation oculaire par rapport au centre de rotation de la tête est connue, l'abaissement de yeux qui est le complément pour avoir l'horoptère vertical en vision de près en est déduit.

Pour chaque point visé de l'environnement nous connaissons la proximité objet de ce point et nous mesurons l'abaissement du regard nécessaire et l'élévation de la tête. Nous pouvons en déduire le coefficient de participation vertical de la tête. Nous pouvons calculer en chaque point de la lentille, la puissance requise pour que le porteur perçoive net ce point. Dans les conditions de sollicitation de la vision de près, la connaissance de la puissance des lentilles requise est donnée par la prescription en vision de près VP du sujet, et à partir de la distance Dvp mesurée nous pouvons déterminer la quantité d'accommodation subjective mise enjeu par le sujet. L'accommodation se déduit en effet à l'aide de la formule suivante :

$$\text{Puissance porteur} = \text{proximité objet} - \text{accommodation.}$$

L'ergorama permet de lier cette accommodation à la convergence nécessaire pour venir fusionner avec les deux yeux le point de vision de près en tenant compte des effets prismatiques des lentilles. L'ergorama définit le rapport de l'accommodation sur la convergence.

Une fois le sujet positionné dans son environnement, il balaie celui-ci du regard, selon un maillage angulaire et carré prédéterminé, par des mouvements coordonnés des yeux et de la tête dans un repère dit physiologique (élévation, azimut). Cette coordination des mouvements respecte les coefficients de participations horizontale et verticale de la tête caractérisant le sujet. Connaissant la position de chaque noeud du maillage par rapport au centre de rotation de la tête, la puissance requise et la position des points d'impacts sur les lentilles (en tenant compte des effets prismatiques dus à cette puissance) sont calculés à partir de la liaison accommodation/convergence caractérisant le sujet. Un tel calcul se fait par itérations imbriquées, soit une boucle d'itérations suivant l'horizontale pour chaque étape de la boucle d'itérations suivant la verticale. Ces itérations sont utilisées pour faire fusionner les deux yeux sur le point traité de l'espace en cherchant à annuler l'erreur de pointé pour chaque oeil par petites modifications successives du couple position des yeux - accommodation.

La présente invention propose donc de mesurer la posture en vision de près par un équipement approprié permettant, entre autre, la mesure de la distance de vision de près préférée, de l'abaissement du regard préféré en vision de près et au moins de l'élévation préférée de la tête ou de l'élévation préférée des yeux en vision de près. Un tel équipement peut comprendre un capteur placé sur la tête du porteur et un élément permettant de repérer le point visé, tel qu'un capteur placé sur un stylo pointeur ou tout appareil permettant la mesure de la rotation des yeux dans leur repère.

Ces paramètres de personnalisation sont alors utilisés pour définir les différentes variables des équations de défaut de puissance (7) et d'astigmatisme résultant (8) utilisées dans le calcul itératif de la puissance requise sur la lentille.

Dans un exemple de mise en oeuvre possible, la cible de défaut de puissance peut être déterminée à partir de la relation (7) comme suit :

$$DefP = \text{Pr}\,obH' \cdot 0{,}75 \cdot \left( \frac{Addn}{3} - Addr \right)$$

Et la cible d'astigmatisme résultant peut être déterminée par la relation (8) comme suit

$$A = Ast_{MAX} \cdot (\text{Pr}\,obH')$$

Avec ProbH' tel que défini dans la relation (4), σh tel que défini dans les relations (5) et (6), et $Ast_{MAX}$ tel que défini dans la relation (9).

Selon cet exemple de mise en oeuvre, les constantes des différentes relations ci-dessus sont déterminées à partir des paramètres physiologiques du porteur.

En particulier :

$$\text{Distrib} = 2/\sqrt{\text{add}}$$

$$\text{LP} = \text{H} \times (1 - \text{Ptv})$$

$$\text{ShMax} = (((\text{Add}_n \times 12) - 4) \times \text{Pth}) + 14$$

$$z = (0,25\ \text{Pth}) + 0,625$$

$$\text{Pospinc} = (1,5\ \text{Add}_n) - (0.4\ \text{LP}) - 5$$

$$\text{Profpinc} = ((\text{LP} - 22,5) \times 0,35 \times \text{Pth}) + 10,2$$

$$\text{Amax}_{VL} = (-0,25\ \text{Pth}) + 0,575$$

$$\text{Amax}_{VP} = (-0,25\ \text{Pth}) + (0,005\ \text{Add}_n) + 0,475$$

$$\text{H}_{VL} = (-0,0035\ \text{LP}) - (0,05\ \text{Pth}) + 0,215$$

$$\text{H}_{VP} = (-0.05\ \text{Pth}) + 0.105$$

Et

$$k = ((0,03.\text{LP} - 1,075) \times \text{Pth}) + (1,717 - 0,027.\text{LP}) + ((90 - \text{H}) \times 0,05\,/\,32,5)$$

$$b = 0,5 - \text{Pth}$$

$$\text{alpha0} = 25.\text{Pth} + (-5.\text{Add}_n) + \text{H}/2 + 0,7.\text{LP} + ((40 - \text{LP}).(\text{Pth} - 0,3).((90 - \text{H})/32,5)) + 119,8$$

$$\text{Sigma} = (0,05.\text{Pth}) + ((0,000714.\text{H}).(1 + (\text{LP} - 25)/62,5) - 0,005$$

Les paramètres physiologiques personnels du porteur, à savoir ses coefficients de participation vertical Pth et horizontal Ptv de la tête en vision de près, ainsi que son horoptère vertical H en vision de près et sa distance de vision de près préférée Dvp sont pris en compte dans le calcul des valeurs cibles du défaut de puissance et d'astigmatisme résultant pour déterminer un jeu de lentilles spécifiquement adapté à ce porteur. Ces valeurs de personnalisation viennent s'ajouter aux valeurs de galbe, d'angle pantoscopique, d'écart pupillaire, de distance verre-oeil et de longueur et hauteur pupillaires de chaque oeil. Tous ces paramètres renseignent le programme de calcul par optimisation optique afin de calculer la paire de lentilles par itérations successives.

A chaque boucle d'itération du calcul de la puissance requise en un point de la lentille, le défaut de puissance toléré est introduit dans le calcul des déviations prismatiques, donc dans le calcul de l'accommodation et de la convergence.

Le défaut d'astigmatisme toléré est calculé pour chaque noeud du maillage une fois que les itérations horizontales et verticales ont convergé sur l'erreur de pointé nulle de l'équation (9) du modèle qui dépend des caractéristiques du porteur.

Un poids dépendant de la position du point d'impact sur la lentille est attribué à la puissance calculée. Un poids, dépendant de la position du point d'impact sur la lentille et de la valeur de ProbH' donnée par l'équation (4) et les caractéristiques du porteur, est attribué au défaut d'astigmatisme tolérable qui devient l'astigmatisme résultant. Les poids le long de la méridienne et dans des zones plus ou moins grandes autour des points de contrôle VL et VP sont fixés à des valeurs nettement supérieures aux autres. Par exemple, un poids compris entre 15 et 10 est attribué à la puissance porteur sur la méridienne et aux points VP et VL alors que tous les autres poids sont fixés à 1 ; et un poids compris entre 12 et 8 est attribué à l'astigmatisme sur la méridienne et aux points VP et VL alors que les autres poids sont donnés par l'expression ProbH' + 1,5.

Un fichier de cibles pondérées en puissance porteur et en astigmatisme résultant est ensuite créé sous un format conforme à sa lecture par le programme d'optimisation. Un ordre de fabrication est alors édité pour commander une machine à usinage direct.

Les lentilles ainsi fabriquées permettront de respecter la posture naturelle du porteur lui offrant ainsi un meilleur confort visuel et postural.

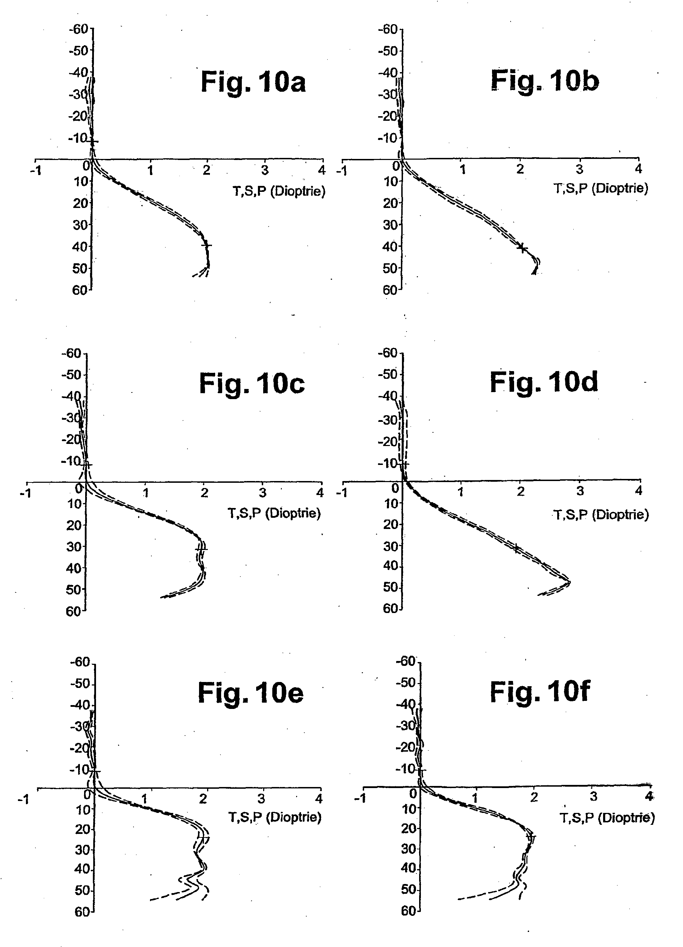

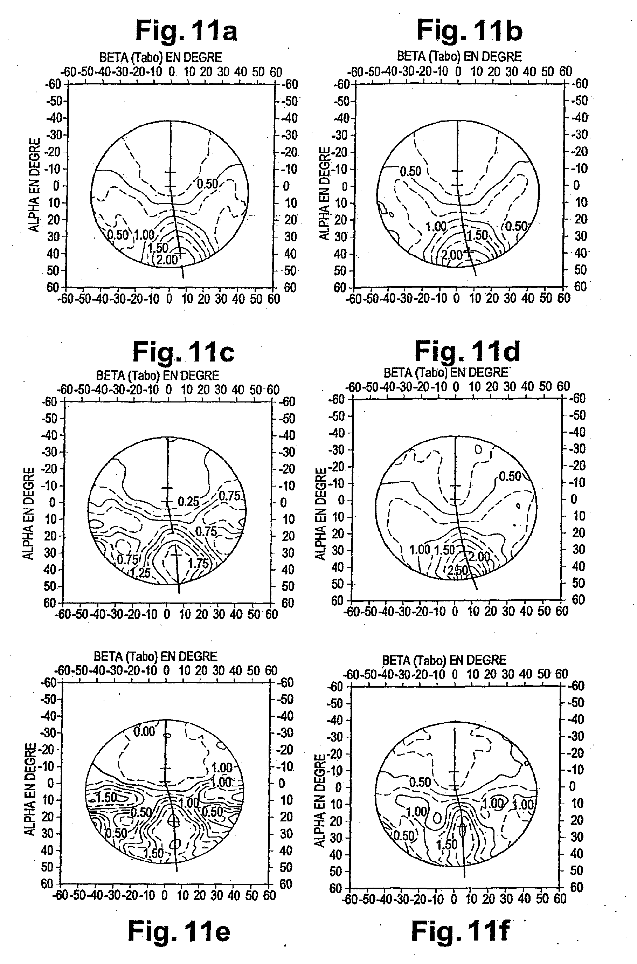

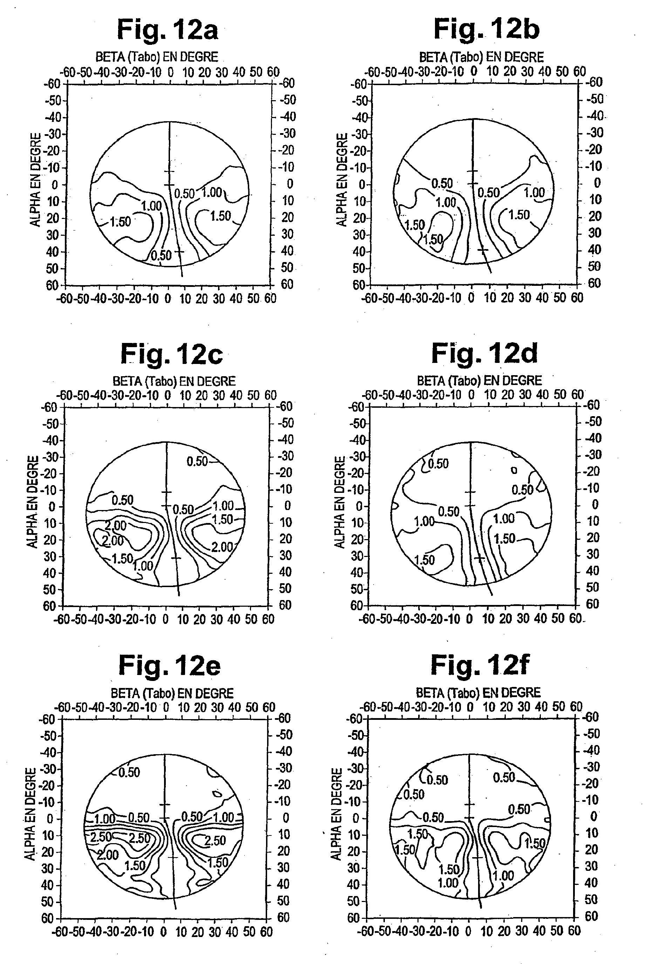

Les figures 10a à 10f représentent des profils de méridienne pour six exemples de lentilles obtenues selon le procédé de l'invention. Les figures 11a à 11f et 12a à 12f représentent les caractéristiques optiques des lentilles des figures 10a à 10d ; soit des cartes de puissance porteur pour la série des figures 11 et des cartes d'astigmatisme résultant pour la série des figures 12.

Le tableau ci-dessous reprend les caractéristiques physiologiques des six exemples de porteurs pour lesquels une paire de lentilles a été déterminée par optimisation. Ce tableau indique, pour chaque porteur, la longueur de progression personnalisée LP = H (1-Ptv) en degré ; l'horoptère vertical H en vision de près en degré, le coefficient de participation verticale de la tête en vision de près Ptv = T/R et le coefficient de participation horizontale de la tête en vision de près.

| Porteur | A | B | C | D | E | F |
|---------|------|------|------|------|------|------|
| LP | 40 | 40 | 32,5 | 32,5 | 25 | 25 |
| H | 90 | 55 | 90 | 55 | 90 | 90 |
| Ptv | 0,556 | 0,273 | 0,639 | 0,409 | 0,722 | 0,722 |
| Pth | 0,5 | 0,5 | 0,3 | 0,7 | 0,3 | 0,7 |

Les séries des figures 10, 11 et 12 montrent une lentille de diamètre 45 mm avec une face avant multifocale progressive et comportant un prisme de base géométrique orienté à 270° dans le repère TABO. Le prisme est de 1,66° pour le porteur A, de 1,70° pour les porteurs B et D, de 1,71° pour les porteurs C et E et de 1,61° pour le porteur F. Le plan de la lentille est incliné par rapport à la verticale de 8° et la lentille présente une épaisseur au centre de 1,8 mm. On a considéré une valeur de q' de 27 mm (telle que définie en référence à la figure 1) pour les mesures sur les lentilles des porteurs A à F.

Sur les séries des figures 11 et 12, on a représentée la lentille dans un repère en coordonnées sphériques, l'angle bêta étant porté en abscisse et l'angle alpha en ordonnée.

Les figures 10a à 10f montrent bien que la longueur de progression LP varie selon les porteurs. Pour les porteurs A et B, l'addition prescrite est bien atteinte à -40° d'élévation oculaire (figures 10a et 10b) alors que la longueur de progression est de 32,5° pour les porteurs C et D (figures 10c et 10d) et de 25° pour les porteurs E et F (figures 10e et 10f). Par ailleurs, comme les porteurs A, C, E et F présentent un horoptère vertical en vision de près voisin de 90°, la distance au document varie très peu quand ils baissent le tête et les yeux pour parcourir le document du haut vers le bas. La puissance requise autour du point VP varie donc très peu (figures 10a, 10c, 10e et 10f). Par contre, pour les porteurs B et D qui ont une valeur d'horoptère vertical en vision de près faible et éloignée de 90°, la lecture du document du haut vers le bas entraîne une variation de la distance des yeux au document du fait d'un abaissement de la tête. La puissance requise pour ces porteurs augmente donc en dessous du point VP ; de 0,04 dioptrie par degrés en moyenne entre 40° et 50° pour le porteur B pour atteindre 2,4 dioptries à 50° (figure 10b) et de 0,06 dioptrie par degré entre 32,5° et 48° pour atteindre 2,9 dioptries à 49° environ pour le porteur D (figure 10d).

La variation de la puissance le long de la méridienne sur les lentilles obtenues avec le procédé de l'invention est donc contrôlée en fonction de l'abaissement des yeux et de la distance du point objet visé qui dépendent de la valeur de l'abaissement du regard R en vision de près - ou de l'horoptère vertical mesuré en vision de près sur ledit porteur - et de la participation des yeux et/ou de la tête dudit porteur dans l'abaissement du regard en vision de près. La variation de puissance le long de la méridienne pour une lentille personnalisée aux besoins d'un porteur donné, telle que proposée par l'invention, présente donc une longueur de progression contrôlée et personnalisée, ainsi qu'une variation de puissance contrôlée et personnalisée en dessous du point de référence en vision de près.

On constate aussi sur les figures 11a à 11f que la variation de puissance optique est sensiblement symétrique par rapport à la méridienne quel que soit le profil de la méridienne considéré. On peut noter des variations de position de cette méridienne en fonction de la longueur de progression et, pour une longueur de progression donnée, en fonction de l'horoptère vertical en vision de près du porteur. Ces différences de position des méridiennes des différentes lentilles données en exemple sont particulièrement visibles en dessous du point de référence en vision de près VP (figures 11b et 11d) du fait de la diminution de la distance des yeux au document entraînée par l'abaissement de la tête dans le cas d'un horoptère vertical en vision de près de faible valeur.

De plus, l'astigmatisme résultant (figures 12a à 12f) définit un couloir, délimité les lignes d'isoastigmatisme égales à 0,5 dioptrie, d'autant plus large en vision de près que la puissance le long de la méridienne varie moins vite. En outre, les champs en vision de près sont d'autant plus dégagés que le coefficient de participation horizontale de la tête est faible (figure 12e comparée à figure 12f) et l'astigmatisme résultant maximal est plus élevé pour des longueurs de progression plus courtes à autres coefficients égaux (figure 12c comparée à figure 12e).

Le modèle physio-optométrique utilisé dans le cadre de l'invention permet de prendre en compte tous ou certains des paramètres physiologiques individuels du porteur et de fixer éventuellement les autres à des valeurs standard par défaut. Le porteur pourra ainsi conserver une posture plus naturelle tout en préservant son confort visuel.

Le modèle pourrait également prendre en compte de nouveaux paramètres de personnalisation identifiés ultérieurement.

## Revendications

**1.** Procédé de détermination par optimisation d'un jeu de lentilles ophtalmiques progressives pour un porteur donné auquel une addition de puissance ($Add_n$) a été prescrite en vison de près, ledit procédé étant implémenté par un ordinateur et comprenant les étapes de :

- mesure de paramètres physiologiques individuels du porteur en vision de près ;
- détermination d'ergoramas associant, sur chaque lentille, un point visé à chaque direction du regard dans les conditions du porté ;
- détermination d'une cible de défaut de puissance et d'une cible d'astigmatisme résultant pour chaque direction du regard dans les conditions du porté, le défaut de puissance cible et l'astigmatisme résultant cible étant déterminés à partir des paramètres physiologiques mesurés du porteur, le défaut de puissance cible est déterminé par la relation suivante :

$$DefP = \frac{(\mathrm{Pr}obH') \left( \left( \frac{Add_n}{a} \right) - Add_r \right)}{kp}$$

Avec : $Add_n$ l'addition nominale prescrite au porteur ;
$Add_r$ l'addition requise en un point du verre; et
kp et a, des constantes déterminées en fonction de l'addition prescrite et des paramètres physiologiques du porteur ;
ProbH', la probabilité d'occurrence de l'orientation oculaire ou du regard ; la probabilité ProbH' étant déterminé par la relation suivante :

$$\mathrm{Pr}obH' = 1 - e^{-\frac{1}{2} \left( \frac{|\alpha|^z}{\sigma h} \right)^2}$$

Avec,

$\alpha$ la déviation horizontale du regard en degrés pour un abaissement donné;

z, un facteur de mise en forme compris entre 0,5 et 1 qui dépend des paramètres physiologiques du porteur ; et

σh, une fonction biphasique de la distribution verticale de l'orientation oculaire et qui s'exprime comme suit :

$$\sigma h = ShMax \times Distrib \times \left( \frac{A\max_{VL}}{1 + 10^{((X0_{VL} - Elev_{oc})Hvl)}} + \frac{A\max_{VP}}{1 + 10^{((Elev_{oc} - X0_{VP})Hvp)}} \right)$$

Ou, Distrib est une constante qui dépend de l'addition nominale prescrite; ShMax est une constante qui dépend de l'addition prescrite et du comportement visiomoteur du porteur;

$Amax_{VL}$ et $Amax_{VT}$, les asymptotes supérieures de σh respectivement en vision de loin et en vision de près ;

$H_{VL}$ et $H_{VT}$, les pentes de variation de σh respectivement lorsque vers la vision de loin et vers la vision de près ;

$Elev_{OC}$, l'élévation oculaire verticale; et

$X0_{VL}$ et $X0_{VT}$, l'élévation oculaire pour lesquelles la moitie de $Amax_{VL}$ et $Amax_{VT}$ est respectivement atteinte sur σh;

- calcul de la puissance requise sur chaque lentille pour ledit ergorama par itérations successives pour atteindre le défaut de puissance cible et le défaut d'astigmatisme cible pour chaque direction du regard.

2.  Le procédé de la revendication 1 dans lequel, l'astigmatisme résultant cible est déterminé par la relation suivante :

$$A = Ast_{MAX}.(\text{Pr}obH')$$

Avec,

ProbH', la probabilité d'occurrence de l'orientation du regard ; et ;

$$Ast_{MAX} = Add_n \times (k + b) \times \left( 0,25 + e^{-\frac{\left( \ln\left( \frac{élev_{reg} - 121}{-alpha0} \right) \right)^2}{sigma}} \right)$$

Où, $Add_n$ est l'addition nominale prescrite au porteur ; et k, b, alpha0 et sigma des constantes déterminées en fonction des paramètres physiologiques du porteur.

3.  Le procédé de l'une des revendications 1 à 2, dans lequel les paramètres physiologiques du porteur mesurés sont au moins les coefficients de participation vertical et horizontal de la tête en vision de près, l'horoptère en vision de près et la distance de vision de près préférée Dvp.

4.  Le procédé selon les revendications 2 ou 3, dans lequel :

$$k = ((0,03.LP- 1,075) \times Pth) + (1,717- 0,027.LP) + ((90- H) \times 0,05 / 32,5),$$

avec Pth le coefficient de participation horizontal de la tête en vision de prés, H étant l'horoptère mesuré et LP = Hx(1-Ptv) avec Ptv le coefficient de participation vertical de la tête en vision de prés;

$$b = 0,5- Pth;$$

$$alpha0 = 25.Pth + (-5.Add_n) + H/2 + 0,7.LP + ((40-LP).(Pth-0,3).((90-H)/32,5)) + 119,8;$$

$$sigma = (0,05.Pth) + ((0,000714.H).(1 + (LP-25)/62,5)- 0,005.$$

**Patentansprüche**

1. Verfahren zur Bestimmung durch Optimierung eines Satzes von ophtalmischen Gleitsichtlinsen für einen gegebenen Träger, dem eine Stärkeaddition ($Add_n$) für die Nahsicht verschrieben wurde, wobei das Verfahren von einem Computer ausgeführt wird und die folgenden Schritte enthält:

   - Messen von individuellen physiologischen Nahsicht-Parametern des Trägers;
   - Bestimmung von Ergoramen, die auf jeder Linse einen anvisierten Punkt jeder Richtung des Blicks unter den Tragebedingungen zuordnen;
   - Bestimmung eines Stärkefehlerziels und eines Ziels eines resultierenden Astigmatismus für jede Richtung des Blicks unter den Tragebedingungen, wobei der Zielstärkefehler und das Ziel des resultierenden Astigmatismus ausgehend von den gemessenen physiologischen Parametern des Trägers bestimmt werden, wobei der Zielstärkefehler durch die folgende Beziehung bestimmt wird:

$$DefP = \frac{\left(\mathrm{Pr}\,obH'\right)\left(\left(\frac{Add_n}{\alpha}\right) - Add_r\right)}{kp}$$

   mit:

   $Add_n$ der für den Träger verschriebenen Nominaladdition;
   $Add_r$ der an einem Punkt des Glases erforderlichen Addition; und
   $kp$ und $a$ Konstanten, die abhängig von der verschriebenen Addition und von den physiologischen Parametern des Trägers bestimmt werden;
   ProbH' der Eintrittswahrscheinlichkeit der Ausrichtung des Auges oder des Blicks; wobei die Wahrscheinlichkeit ProbH' durch die folgende Beziehung bestimmt wird:

$$\mathrm{Pr}\,obH' = 1 - e^{\frac{1}{2}\left(\frac{|a|^z}{\sigma h}\right)^2}$$

   mit:

   $\alpha$ der waagrechten Abweichung des Blicks in Grad für ein gegebenes Senken;
   $z$ einem Formgebungsfaktor zwischen 0,5 und 1,
   der von den physiologischen Parametern des Trägers abhängt; und
   $\sigma h$ einer zweiphasigen Funktion der senkrechten Verteilung der Augenausrichtung und die sich folgendermaßen ausdrückt:

$$\sigma h = ShMax \times Distrib \times \left(\frac{A\max_{VL}}{1 + 10^{((X0_{VL} - Elev_{OC})Hvl)}} + \frac{A\max_{VP}}{1 + 10^{((Elev_{OC} - X0_{VP})Hvp)}}\right)$$

   wobei

Distrib eine Konstante ist, die von der verschriebenen Nominaladdition abhängt;

ShMax eine Konstante ist, die von der verschriebenen Addition und vom visiomotorischen Verhalten des Trägers abhängt; $Amax_{VL}$ und $Amax_{VT}$ die oberen Asymptoten von $\sigma h$ in Fernsicht bzw. Nahsicht sind;

$H_{VL}$ und $H_{VT}$ die Änderungsgefälle von $\sigma h$ zur Fernsicht bzw. zur Nahsicht sind;

$Elev_{OC}$ die senkrechte Augenanhebung ist; und

$X0_{VL}$ und $X0_{VT}$ die Augenanhebungen sind, für die die Hälfte von $Amax_{VL}$ bzw. $Amax_{VT}$ bei $\sigma h$ erreicht werden;

- Berechnung der auf jeder Linse erforderlichen Stärke für das Ergorama durch aufeinanderfolgende Iterationen, um den Zielstärkefehler und den Zielastigmatismusfehler für jede Richtung des Blicks zu erreichen.

**2.** Verfahren nach Anspruch 1, wobei der resultierende Zielastigmatismus durch die folgende Beziehung festgelegt wird:

$$A = Ast_{MAX}.(ProbH')$$

mit:

ProbH' der Auftrittswahrscheinlichkeit der Ausrichtung des Blicks; und

$$Ast_{MAX} = Add_n \times (k + b) \times \left( 0,25 + e - \frac{\left( In\left( \frac{elev_{reg} - 121}{-alpha0} \right) \right)^2}{sigma} \right)$$

wobei $Add_n$ die für den Träger verschriebene Nominaladdition ist; und k, b, alpha0 und sigma Konstanten sind, die abhängig von den physiologischen Parametern des Trägers festgelegt werden.

**3.** Verfahren nach einem der Ansprüche 1 bis 2, wobei die gemessenen physiologischen Parameter des Trägers mindestens die senkrechten und waagrechten Nahsicht-Beteiligungskoeffizienten des Kopfes, der Nahsicht-Horopter und der bevorzugte Nahsicht-Abstand Dvp sind.

**4.** Verfahren nach Anspruch 2 oder 3, wobei:

$$k = ((0,03.LP-1,075) \text{ x } Pth) + (1,717 - 0,027.LP) + ((90 - H) \text{ x } 0,05/32,5),$$

mit Pth dem waagrechten Nahsicht-Beteilungskoeffizienten des Kopfes, H dem gemessenen Horopter, und LP = Hx(1-Ptv) mit Ptv dem senkrechten Nahsicht-Beteiligungskoeffizienten des Kopfes;

$$b = 0,5 - Pth;$$

$$alpha0 = 25.Pth + (-5.Add_n) + H/2 + 0,7.LP + ((40-LP).(Pth-0,3).((90-H)/32,5)) + 119,8;$$

$$sigma = (0,05.Pth) + ((0,000714.H).(1 + (LP-25)/62,5) - 0,005.$$

**Claims**

1. Method for determining, by optimization, a set of progressive ophthalmic lenses for a given wearer for whom a power addition ($Add_n$) has been prescribed in near sight, said method being implemented by a computer and comprising the steps of:

   - measuring individual physiological parameters of the wearer in near sight;
   - determining ergoramas associating, on each lens, a point targeted in each direction of the gaze under wearing conditions;
   - determining a power defect target and a resultant astigmatism target for each direction of the gaze under wearing conditions, the target power defect and target resultant astigmatism being determined from the measured physiological parameters of the wearer, the target power defect is determined by the following relationship:

$$DefP = \frac{(\mathrm{Pr}obH')\cdot\left(\left(\dfrac{Add_n}{a}\right) - Add_r\right)}{kp}$$

   with: $Add_n$ being the nominal addition prescribed to the wearer;
   $Add_r$ being the addition required at a point of the glass; and
   kp and a being constants determined as a function of the prescribed addition and of the physiological parameters of the wearer;
   ProbH' being the probability of occurrence of the ocular orientation or of the gaze; the probability ProbH' being determined by the following relationship:

$$\mathrm{Pr}obH' = 1 - e^{-\frac{1}{2}\left(\frac{|\alpha|^z}{\sigma h}\right)^2}$$

   with

   $\alpha$ being the horizontal deviation of the gaze in degrees for a given lowering;
   z being a shaping factor between 0.5 and 1 which depends on the physiological parameters of the wearer; and
   $\sigma h$ being a biphasic function of the vertical distribution of the ocular orientation and which is expressed as follows:

$$\sigma h = ShMax \times Distrib \times \left(\frac{A\max_{VL}}{1 + 10^{((X0_{VL} - Elev_{oc})Hvl)}} + \frac{A\max_{VP}}{1 + 10^{((Elev_{oc} - X0_{VP})Hvp)}}\right)$$

   where Distrib is a constant which depends on the prescribed nominal addition;
   ShMax is a constant which depends on the prescribed addition and on the visuomotor behaviour of the wearer;
   $A\max_{VL}$ and $A\max_{VT}$ being the higher asymptotes of $\sigma h$ respectively in far sight and in near sight;
   $H_{VL}$ and $H_{VT}$ being the slopes of variation of $\sigma h$ respectively towards the far sight and towards the near sight;
   $Elev_{OC}$ being the vertical ocular elevation; and $X0_{VL}$ and $X0_{VT}$ being the ocular elevation for which half of $Amax_{VL}$ and $Amax_{VT}$ is respectively reached on $\sigma h$;

   - calculating the power required on each lens for said ergorama by successive iterations to reach the target power defect and the target astigmatism defect for each direction of the gaze.

2. Method according to Claim 1, in which the target resultant astigmatism is determined by the following relationship:

$$A = Ast_{MAX} . \left( \mathrm{Pr}\, obH' \right)$$

with
ProbH' being the probability of occurrence of the orientation of the gaze; and

$$Ast_{MAX} = Add_n \times \left(k+b\right) \times \left( 0.25 + e^{ -\frac{\left( \ln\left( \frac{elev_{reg}-121}{-alpha0} \right) \right)^2}{sigma} } \right)$$

where $Add_n$ is the nominal addition prescribed to the wearer; and k, b, alpha0 and sigma are constants determined as a function of the physiological parameters of the wearer.

3.  Method according to one of Claims 1 and 2, in which the physiological parameters of the wearer that are measured are at least the vertical and horizontal participation coefficients of the head in near sight, the horopter in near sight and the preferred near sight distance Dvp.

4.  Method according to Claim 2 or 3, in which:

```
k  =  ((0.03.LP-  1.075)  ×  Pth)  +  (1.717-  0.027.LP)  +
((90- H)  ×  0.05  /  32.5),
```

with Pth being the horizontal participation coefficient of the head in near sight, H being the measured horopter and LP = Hx(1-Ptv) with Ptv being the vertical participation coefficient of the head in near sight;

```
b  =  0.5-  Pth;
```

```
alpha0  =  25.Pth  +  (-5.Add_n)  +  H/2  +  0.7.LP  +  ((40-
LP).(Pth-0.3).((90-H)/32.5))  +  119.8;
```

```
sigma  =  (0.05.Pth)  +  ((0.000714.H).(1  +  (LP-25)/62.5)-
0.005.
```

Fig. 1

Fig. 2

Fig. 3

**Fig. 4**

Elévation de la Tête (T)

Abaissement du regard (R)

Elévation Yeux (Y)

Horoptere (H)

Inclinaison document (B)

Probabilité relative d'occurrence d'une déviation du regard pour un abaissement donné

$\sigma = 40$

Déviation horizontale (°)

**Fig. 5**

G_VL
G_VP
Distribution globale

Elevation du regard (°)

**Fig. 6**

**Fig. 7a**

**Fig. 7b**

SigmaH en fonction de l'élévation oculaire

## Fig. 8

AstMax en fonction de l'élévation du regard

## Fig. 9

EP 1 960 825 B1

Fig. 10a

Fig. 10b

Fig. 10c

Fig. 10d

Fig. 10e

Fig. 10f

24

## Fig. 11a

BETA (Tabo) EN DEGRE

## Fig. 11b

BETA (Tabo) EN DEGRE

## Fig. 11c

BETA (Tabo) EN DEGRE

## Fig. 11d

BETA (Tabo) EN DEGRE

BETA (Tabo) EN DEGRE

## Fig. 11e

BETA (Tabo) EN DEGRE

## Fig. 11f

## Fig. 12a

BETA (Tabo) EN DEGRE

## Fig. 12b

BETA (Tabo) EN DEGRE

## Fig. 12c

BETA (Tabo) EN DEGRE

## Fig. 12d

BETA (Tabo) EN DEGRE

## Fig. 12e

BETA (Tabo) EN DEGRE

## Fig. 12f

BETA (Tabo) EN DEGRE

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A

- FR 2704327 A
- WO 9812590 A
- EP 0990939 A
- FR 2683643 A

**Littérature non-brevet citée dans la description**

- **LEGRAND.** Optique Physiologique. 1965